# EUROPEAN PATENT APPLICATION

(11) **EP 0 961 524 A1**
(43) Date of publication of application: **01.12.1999**
(21) Application number: 98109618.3
(22) Date of filing: 27.05.1998
(51) Int. Cl.: H05B 3/50, H05B 3/52, C04B 38/02

(54) **Method for constructing armoured resistance elements provided with a finned disperser and a resistance element obtained by the method**

(71) Applicant: I.R.C.A. S.p.a. Industria Resistenze Corazzate e Affini, 31020 San Vendemiano (Treviso) (IT)
(72) Inventor: Zipponi, Luca, 31020 San Vendemiano (IT)
(74) Representative: Piovesana, Paolo

(57) **Abstract**

A method for constructing armoured resistance elements provided with a finned disperser, characterised by comprising the following steps:
- preparing a pack of fins (2), each comprising at least one passage hole (3),
- forming a tubular metal sheath (4,5) and fixing it into the holes in said fins,
- inserting a resistive wire into said sheath,
- securing said wire to said sheath by adding magnesium oxide to which an expanding substance for said oxide has been added.

## Description

This invention relates to a method for constructing armoured resistance elements provided with a finned disperser, and a resistance element obtained by the method.

Methods for constructing armoured resistance elements are known.

These methods generally involve forming from a welded profiled strip a steel tube into which a nickel-chromium alloy or ferrochromium-aluminium alloy heating wire of differing diameter and resistivity is inserted. Suitable winding machines cause the wire to assume the form of a spiral similar to a spring with a well defined outer diameter, which is less than the inner diameter of the tube. To the ends of said spiral there are welded terminal pins (cold parts), to which there are then welded the instant connectors for the electrical feed.

The tube and the heating spiral are then conveyed to a filling machine where these are firstly checked for perfect coaxiality, after which a magnesium powder of well defined particle size is then allowed to fall into the tube until it has been completely filled. The magnesium oxide is generally consolidated by vibration.

The resistance element obtained in this manner is then passed through a series of scalar rollers of half-round profile in order to reduce the tube diameter and compact the magnesium oxide to ensure that the heating spiral located within the tube cannot move. At the same time compacting the magnesium oxide increases its electrical rigidity and thermal conductivity.

Dissipation fins are then fixed to the resultant resistance element by mechanically pressing the fins or by welding and then spiralling a continuous fin.

This known method has however certain drawbacks, and in particular:
- laborious construction due to the pressing of the individual fins or to the welding and spiralling of the continuous fin,
- time wastage during the preparation of the resistance element due to the rolling operation.

The resistance element itself presents the following drawbacks:
- low heat transfer in the case of helically welded fins,
- insulation loss due to the hygroscopicity of the magnesium oxide,
- time wastage in mounting components into a bank of resistance elements.

An object of the invention is to eliminate these drawbacks by constructing an armoured resistance element provided with a finned disperser by an easily and comfortably effected method resulting in substantial cost reduction.

This and further objects which will be apparent from the ensuing description are attained according to the invention by a method for constructing armoured resistance elements as claimed in claim 1.

The invention also provides an armoured resistance element as claimed in claim 6.

A preferred embodiment of the invention is described in detail hereinafter with reference to the accompanying drawings, in which:
Figure 1 is a side view of a plurality of fins fixed onto the tube by expansion, and
Figure 2 is a side view of a plurality of fins provided with a collar prior to brazing.

As can be seen from the figures, the method of the invention comprises a first step involving the formation of a finned pack 1 in which a plurality of aluminium fins 2 provided with a hole 3 are stacked onto an aluminium tube 4 forming the sheath of the resistance element, and a second step in which the tube is internally expanded to fix the fins in the desired position. In other cases the tube can be constructed of iron, copper-brazed iron, stainless steel or copper.

On termination of this working step, the result of which is a tube 2 provided with a plurality of fins 4, a resistive spiral is inserted into the tube and centered relative thereto, then secured by inserting a mixture consisting of magnesium oxide to which boric acid has been added.

The product is then heat-treated preferably in an even at a temperature of about 200°C, during which the magnesium oxide and additive mixture expands to secure the resistive wire to the tube. In the illustrated embodiment, several tubes 4 have been inserted into each fin 2 to obtain a bank of resistance elements connected together at the end terminals 7 by connectors (not shown on the drawings).

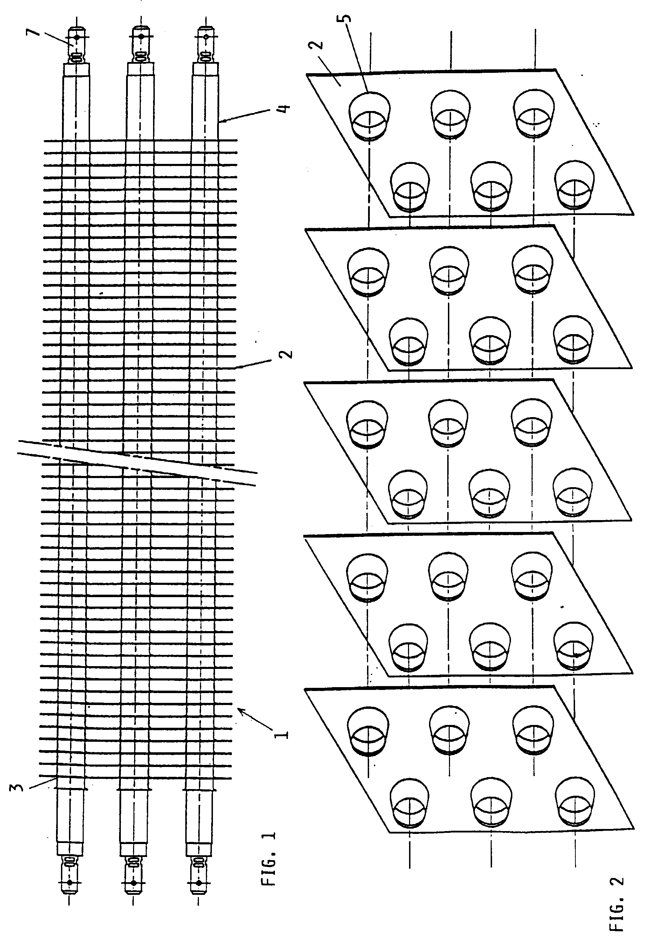

In the embodiment shown in Figure 2 the fins are produced directly provided with a suitable formed collar by pressing, and are then stacked so that the collars correspond, and brazed in a furnace.

On termination of brazing, the various collars form a tube constituting a sheath 4 rigid with the fins.

On termination of this step the tube is filled with magnesium oxide as in the preceding case.

From the aforegoing it is apparent that the invention has numerous advantages, and in particular:
- constructional simplicity as the rolling step is eliminated,
- the ability to use existing equipment previously used for forming evaporator tubes for refrigerators.

The resistance element itself has the following advantages:
- more effective insulation due to the low hygroscopicity of the mixture,
- better heat transfer,
- ease of assembly.

It should be noted that this resistance element can advantageously be used in refrigerators as one or more tubes of the evaporator can be used (after preparation) as a resistance element, to be powered during evaporator defrosting.

## Claims

1. A method for constructing armoured resistance elements provided with a finned disperser, characterised by comprising the following steps:
- preparing a pack of fins (2), each comprising at least one passage hole (3),
- forming a tubular metal sheath (4,5) and fixing it into the holes in said fins,
- inserting a resistive wire into said sheath,
- securing said wire to said sheath by adding magnesium oxide to which an expanding substance for said oxide has been added.

2. A method as claimed in claim 1, characterised in that the expanding substance is a heat-expanding substance.

3. A method as claimed in claim 1, characterised in that the heat-expanding substance is boric acid.

4. A method as claimed in claim 1, characterised in that the sheath is fixed to the fins by expansion.

5. A method as claimed in claim 1, characterised in that the fins are formed by pressing, and are provided with collars (5).

6. An armoured resistance element provided with a finned disperser and constructed by the method in accordance with one or more of claims 1 to 5, characterised by consisting of a metal sheath (4,5) provided with a plurality of fins (2), within said sheath there being housed a resistive wire secured to said sheath by the addition of magnesium oxide to which an expanding substance for said oxide has been added.
